# DEMANDE DE BREVET EUROPEEN

(11) **EP 1 217 525 A1**
(43) Date de publication de la demande: **26.06.2002**
(21) Numéro de dépôt: 01403236.1
(22) Date de dépôt: 14.12.2001
(51) Int. Cl.: G06F 12/02

(54) **Procédé de gestion de mémoire**

(30) Priorité: 19.12.2000 FR 0016585
(71) Demandeur: Thales, 75008 Paris (FR)
(72) Inventeur: Normant, Eric, Thales, 94117 Arcueil Cedex (FR); Jugie, Damien, Thales, 94117 Arcueil Cedex (FR); Guillon, Benoît, Thales, 94117 Arcueil Cedex (FR)
(74) Mandataire: Lucas, Laurent Jacques

(57) **Abrégé**

L'invention concerne un procédé de gestion de la mémoire d'une machine de traitement comportant plusieurs calculateurs élémentaires disposant chacun d'une mémoire locale.

Le procédé alloue une quantité de mémoire initiale dans chaque calculateur ; puis il y effectue une allocation et une libération dynamiques d'objet telles que le premier objet libéré est le dernier alloué ; il effectue un attachement / détachement d'au moins un calculateur distant à un objet déclaré partagé par le calculateur propriétaire de l'objet, avec une liste d'attachements gérée par le calculateur propriétaire de l'objet ; il effectue un transfert d'un objet d'un calculateur à un objet partagé d'un calculateur distant ; et il effectue une libération de la mémoire locale pour chaque calculateur.

Un gestionnaire de mémoire est un objet opaque offrant des services à travers lesquels le procédé de gestion effectue des requêtes pour faire des allocations dynamiques d'une part et des attachements à des mémoires distantes d'autre part.

L'invention substitue aux outils de gestion de la mémoire livrés avec la machine une bibliothèque de gestion de mémoire mettant en oeuvre le procédé.

Application au développement de modes radar.

## Description

Le procédé et le dispositif de l'invention concernent la gestion de la mémoire d'une machine de traitement numérique comportant plusieurs calculateurs élémentaires. Ils masquent au développeur de logiciel les particularités de la mémoire de la machine de traitement et lui fournissent des moyens de gestion de la mémoire plus élaborés que les outils spécifiques livrés avec la machine. Ils s'appliquent à des applications temps réel, notamment dans le domaine des radars. Ils s'appliquent également à des ateliers de développement.

Les machines de traitement numérique présentent diverses architectures physiques mais d'une manière générale une machine de traitement est composée d'une pluralité de calculateurs élémentaires, un calculateur élémentaire représentant l'association d'une ressource de calcul dite « processeur », d'une mémoire accessible de façon aléatoire dite « RAM » pour l'expression anglo-saxonne « Random Access Memory » et d'une fonction de communication en entrée et en sortie avec l'extérieur lequel est par exemple un dispositif de stockage ou un autre calculateur élémentaire.

Des machines de traitement numérique dédiées aux applications temps réel de traitement du signal dites COTS pour l'expression anglo-saxonne « Commercial Off-The-Shelf » sont mises dans le commerce avec leurs logiciels de base associés, notamment le système d'exploitation, le compilateur, le débogueur et des bibliothèques mathématiques optimisées. Ces machines développées pour un large éventail de clients et d'applications sont moins chères que des machines dont l'architecture et le logiciel sont spécifiques à un domaine comme par exemple celui des radars aéroportés.

Les logiciels de base livrés avec la machine de traitement COTS offrent au développeur d'une application logicielle des outils pour gérer les allocations et les libérations dynamiques de mémoire au cours de l'exécution de l'application. Cependant, ces outils s'avèrent insuffisants face aux possibilités d'erreurs telle que l'oubli de libérer une zone mémoire après usage ou telle que l'utilisation d'une zone non allouée, donnant lieu à des arrêts brutaux, à des effacements de données précieuses voire à l'effacement du programme lui-même. Les défauts d'une application logicielle dus à ces erreurs mal gérées par les logiciels de base sont très coûteux lors du développement de l'application logicielle car leur élimination et surtout leur mise en évidence sont difficiles à assurer.

D'autre part, un usage répété d'allocations et de libérations dynamiques de mémoire peut induire une fragmentation importante de la mémoire ne permettant plus de disposer en contigu de la totalité de la mémoire libre et entraînant une perte d'efficacité de l'application à cause des appels système associés.

Pour remédier à ces inconvénients, l'invention propose de substituer aux outils de gestion de la mémoire livrés avec la machine une bibliothèque de gestion de la mémoire mettant en oeuvre un procédé de gestion particulier.

Selon l'invention, le procédé de gestion de la mémoire d'une machine de traitement comportant plusieurs calculateurs élémentaires disposant chacun d'une mémoire locale comporte les services suivants :
une allocation d'une quantité de mémoire initiale dans la mémoire locale d'au moins un calculateur élémentaire ;
une allocation et une libération dynamiques d'objet par un calculateur élémentaire dans sa quantité de mémoire initiale telles que le premier objet libéré est le dernier alloué ;
une allocation dynamique par un calculateur élémentaire dans sa quantité de mémoire initiale d'un objet partagé telle que ledit calculateur élémentaire est propriétaire de l'objet partagé et déclare cet objet partagé accessible à ou aux calculateurs élémentaires distants ;
un attachement d'au moins un calculateur élémentaire distant à l'objet partagé, ledit calculateur élémentaire distant n'étant pas propriétaire de l'objet partagé, avec une liste d'attachements gérée par le calculateur élémentaire propriétaire de l'objet partagé ;
un détachement d'un calculateur élémentaire distant de l'objet partagé avec mise à jour de ladite liste d'attachements ;
transfert d'un objet d'un calculateur élémentaire à un objet partagé d'un calculateur élémentaire distant ;
une libération de la mémoire locale pour chaque calculateur élémentaire.

Selon l'invention, le procédé comporte un gestionnaire de mémoire à travers lequel le procédé effectue lesdits services. Un gestionnaire de mémoire est créé pour chaque calculateur élémentaire sur lequel le procédé effectue une allocation d'une quantité de mémoire initiale dans la mémoire locale. Le gestionnaire de mémoire d'un calculateur est instantié lors de cette allocation.

L'invention concerne également une machine de traitement permettant la mise en oeuvre du procédé de gestion.

L'invention s'applique à des langages comme le C-ANSI, le C++, l'ADA.

L'invention utilise une entité de gestion de la mémoire qui permet à l'application de connaître à chaque instant l'état de la mémoire locale de chaque calculateur élémentaire. Le gestionnaire de mémoire est un objet opaque offrant des services à travers lesquels le procédé de gestion effectue des requêtes pour faire des allocations dynamiques d'une part et des attachements à des mémoires distantes d'autre part. Une quantité de mémoire locale est allouée une seule fois par le système de la machine lors de l'instantiation de l'entité de gestion de la mémoire puis des objets mémoire sont instantiés dynamiquement par la suite dans cette quantité de mémoire initiale. Les allocations et libérations d'objets mémoire se font dans un ordre déterminé de sorte que le premier objet libéré correspond au dernier objet alloué. Un objet mémoire alloué en mode partagé par son calculateur propriétaire est accessible par un calculateur distant. L'accès à une mémoire distante s'effectue par l'accès au gestionnaire distant. Un attachement à un objet par un calculateur distant est mémorisé dans une zone réservée à ce calculateur distant au sein de la mémoire du calculateur propriétaire de l'objet. Un objet n'est détruit que par son calculateur propriétaire et un objet partagé n'est détruit qu'en l'absence d'attachement. L'invention évite la fragmentation de la mémoire et contrôle les destructions de mémoire.

L'invention propose un transfert de mémoire pour lire ou écrire un objet distant en mode partagé tout en limitant la durée d'utilisation de ressources limitées de la machine de traitement comme par exemple celles nécessaires au mapping du gestionnaire de mémoire distant. L'invention permet de réaliser en parallèle des transferts de mémoire sur plusieurs calculateurs élémentaires distants.

L'invention renforce les vérifications effectuées sur l'utilisation de la mémoire. Elle élimine les défauts, dus à une mauvaise gestion de la mémoire, qui sont possibles et fréquents lorsque la mémoire est directement exploitée avec les outils de base livrés avec les machines de traitement temps réel du commerce.

L'invention permet au développeur d'application logicielle de ne pas se soucier des particularités de la mémoire de la machine de traitement. L'effort de développement est allégé de la gestion fine de la mémoire et le coût de développement est réduit.

Elle permet de contribuer à la portabilité de l'application sur des machines diverses, notamment une machine de développement et plusieurs versions d'une machine cible, en encapsulant la partie gestion de mémoire. L'invention peut être mise en oeuvre dans un atelier de développement sur machine généraliste puis sur une machine cible par compilation croisée.

D'autres caractéristiques et avantages de l'invention apparaîtront à l'aide de la description qui suit faite en regard de dessins annexés qui représentent :
- la figure 1, un exemple de machine de traitement ;
- la figure 2, un exemple de gestionnaire de mémoire selon l'invention ;
- la figure 3, un exemple de conversion d'une adresse distante en une adresse locale ;
- la figure 4, un transfert de données entre un objet local et un objet distant ;
- la figure 5, un transfert de données entre descripteurs de mémoire.

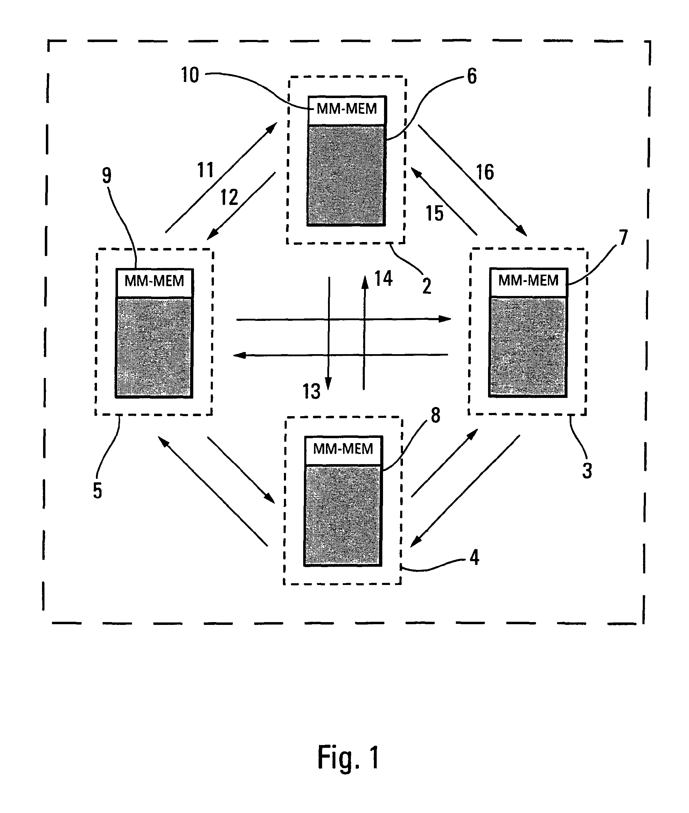

La figure 1 illustre une machine de traitement 1 comportant une pluralité, par exemple 4, de calculateurs élémentaires, 2 à 5 comportant chacun une mémoire locale 6 à 9. Lors de l'initialisation de la gestion de la mémoire, le procédé effectue une allocation dynamique d'une quantité initiale de la mémoire locale 6 d'un calculateur élémentaire 2, cette quantité correspond de préférence à la totalité de la mémoire locale disponible. L'allocation s'effectue par un appel au système d'exploitation de la machine, par exemple en langage de programmation C au moyen d'un MALLOC(). Un objet appelé gestionnaire de mémoire 10 est plaqué par exemple en tête de cette mémoire locale allouée. Le procédé de gestion de mémoire exploite ensuite la quantité initiale de mémoire locale à l'aide des services de l'objet gestionnaire.

Lors de l'initialisation de la gestion de la mémoire, le procédé établit en outre des accès 11 et 12, 13 et 14, 15 et 16 entre la mémoire d'un calculateur élémentaire 2 et la mémoire de chacun des autres calculateurs élémentaires 3 à 5 de la machine. Cet accès permet une visibilité inter-calculateurs élémentaires.

Le procédé effectue l'initialisation de la mémoire et de l'accès pour chacun des calculateurs élémentaires participant à l'application. De préférence l'allocation de mémoire locale est effectuée sur chacun des calculateurs élémentaires avec un objet gestionnaire de même structure.

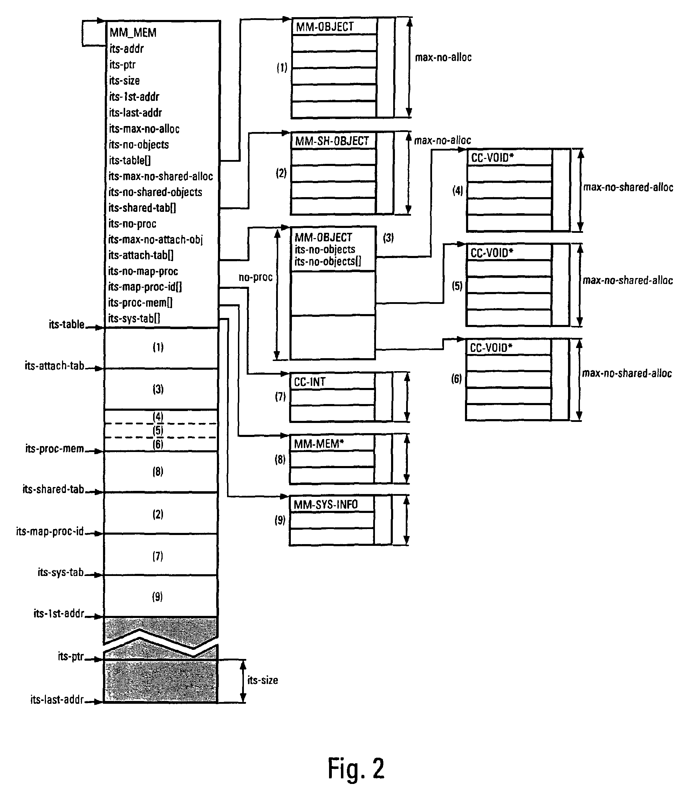

Un exemple de structure interne de l'entité gestionnaire de mémoire est illustré par la figure 2. Le descripteur de structure MM_MEM comporte les champs suivants :
l'adresse du gestionnaire de mémoire dans la mémoire locale, its_addr ;
l'adresse de la zone mémoire libre, its_ptr ;
la taille mémoire disponible, its_size ;
le début de la zone mémoire disponible, its_1st_addr ;
la fin de la zone mémoire disponible, its_last_addr ;
le nombre maximum d'objets allouables, its_max_no_alloc ;
le nombre courant d'objets alloués, its_no_objects ;
le tableau 1 des objets alloués de type MM_OBJECT, its_table ;
le nombre maximum d'objets partagés, its_max_no_shared_alloc ;
le nombre courant d'objets partagés, its_no_shared_objects ;
le tableau 2 des objets partagés de type MM_SH_OBJECT , its_shared_tab ;
le nombre de calculateurs élémentaires déclarés, its_no_proc ;
le nombre maximum d'objets attachables, its_max_no_attach_obj ;
le tableau 3 par calculateur des objets attachés de type MM_ATTACH, its_attach_tab ;
le nombre de calculateurs mappés, its_no_map_proc ;
le tableau 7 des numéros logiques associés aux calculateurs mappés, its_map_proc_id ;
le tableau 8 des adresses des objets gestionnaires des calculateurs, its_proc_mem ;
le tableau 9 des informations de type MM_SYS_INFO spécifiques à la machine pour les calculateurs, its_sys_tab ;

L'objet gestionnaire de mémoire d'un calculateur comporte notamment des objets de type MM_OBJECT qui sont des objets de mémoire allouables dans la quantité de mémoire locale allouée initialement et des objets de type MM_SH_OBJECT qui permettent à un objet de mémoire, appelé objet partagé, d'être accessible aux autres calculateurs.

La taille des tableaux du gestionnaire de mémoire dépend des caractéristiques de la machine considérée et des paramètres d'instantiation du procédé comme le nombre maximum d'allocations d'objets autorisées et le nombre maximum d'objets allouables en mode partagé.

Dans l'exemple de la figure 2, la machine comporte 3 calculateurs élémentaires déclarés pour l'application, its_no_proc est égal à 3, avec un maximum de 6 objets allouables, its_max_no_alloc est égal à 6, parmi lesquels 5 au maximum peuvent être déclarés partagés, its_max_no_shared_alloc est égal à 5.

Le procédé de gestion comporte un service MM_init() d'instantiation du gestionnaire de mémoire. Ce service s'appuie sur le logiciel de base de gestion système de la machine et réalise les opérations suivantes. Le service identifie les calculateurs élémentaires de la machine, par exemple à l'aide du numéro du premier et du dernier calculateur élémentaire. Puis il récupère la taille de la mémoire disponible du calculateur élémentaire courant et aligne sa valeur sur une frontière de mot, par exemple sur un mot de huit octets appelé mot long. Le service détermine les tailles des différentes entités du descripteur MM_MEM et aligne leurs valeurs sur une frontière de mot. Il calcule la somme des tailles des entités contenues dans la structure du gestionnaire de mémoire, laquelle correspond à la taille totale de la structure et le service contrôle que cette taille ne dépasse pas la taille de la mémoire disponible. Puis le service alloue de préférence toute la mémoire disponible du calculateur élémentaire courant par un appel à la gestion du système d'exploitation de la machine et il contrôle le succès de l'allocation. Il plaque l'entité mémoire sur la zone de mémoire ainsi allouée. Le service d'instantiation effectue ensuite une initialisation de l'entité mémoire par une initialisation des pointeurs du descripteur en fonction des différentes tailles, une initialisation des structures système dans le tableau 9 its_sys_tab des informations de type MM_SYS_INFO spécifiques à chaque calculateur élémentaire par un appel à la gestion du système d'exploitation de la machine, une initialisation des champs du descripteur, une initialisation des opérations de mapping futures sur les calculateurs élémentaires distants.

Le service effectue une mise en visiblité du descripteur mémoire vis à vis des calculateurs distants par un appel à la gestion du système d'exploitation de la machine. Pour chaque calculateur élémentaire distinct du calculateur courant, appelé calculateur distant, le service réalise un attachement du calculateur courant à la mémoire du calculateur distant par un appel à la gestion du système d'exploitation de la machine. Le service MM_init() d'instantiation du gestionnaire de mémoire renvoie un pointeur sur le descripteur mémoire initialisé.

Une fois le gestionnaire instantié, le procédé réalise une allocation et une libération dynamique de mémoire dans la quantité de mémoire allouée initialement au moyen de deux services dédiés MM_alloc() et MM_free().

Par le service MM_init(), le procédé de gestion de la mémoire n'effectue par le système d'exploitation de la machine de traitement qu'une seule allocation de la mémoire locale du calculateur élémentaire à l'instantiation de l'entité de gestion de la mémoire. Toute la mémoire disponible est allouée en une seule fois et toutes les entités instantiées par la suite le sont à partir de cette quantité de mémoire initiale. Le procédé limite le nombre d'appels au système d'exploitation de la machine de traitement. Le procédé présente l'avantage de réduire le temps de traitement.

Le service d'allocation dynamique de mémoire MM_alloc() permet d'allouer un nouvel objet dans la mémoire locale. Si le nombre maximum d'objets allouables, its_max_no_alloc, n'est pas atteint, le service aligne la taille du nouvel objet sur une frontière de mot, c'est-à-dire qu'il alloue un objet avec une taille réelle multiple de la taille d'un mot, la taille réelle correspondant au premier multiple supérieur à la taille de l'objet à allouer. Le service lit dans le descripteur de mémoire la taille de la mémoire disponible, référencée dans le champ its_size, et l'adresse de la zone mémoire libre, its_ptr, qui indique la position courante dans le tas de mémoire disponible. S'il reste assez de mémoire disponible dans le tas, le service ajoute le nouvel objet alloué de type MM_OBJECT dans le tableau 1 des objets, its_table.

Le descripteur MM_OBJECT associé à un objet mémoire alloué comporte les champs suivants :
l'adresse de l'objet alloué dans la mémoire, its_address ;
la taille de l'objet en octets, its_size ;
le nom du fichier appelant, its_file ;
le numéro de la ligne d'allocation dans le fichier, its_line .

Le nouvel objet est empilé dans le tableau des objets qui se comporte comme une pile LIFO, pour l'expression anglo-saxonne « Last In First Out » où le dernier objet inscrit dans le tableau sera le premier effacé. Le service incrémente d'une unité le nombre courant des objets alloués, its_no_objets. Le service décrémente la taille de la mémoire disponible, its_size, et incrémente l'adresse de la zone mémoire libre, its_ptr, de la taille du nouvel objet. Le service renvoie le pointeur its_ptr qui indique la nouvelle position courante dans le tas de mémoire disponible.

Le service peut allouer un objet en mode partagé, il mémorise alors son adresse et son étiquette, ou nom, dans un objet dit objet partagé de type MM_SH_OBJECT rangé dans le tableau 2 des objets partagés, its_shared_tab. Le descripteur MM_SH_OBJECT comporte les champs suivants :
le nom de l'objet partagé, its_label ;
l'adresse de l'objet partagé, its_address ;
et l'indicateur d'accès de l'objet, its_init_flag .

Si le nom du nouvel objet partagé ne se trouve pas déjà dans le tableau des objets partagés et si le nombre maximum d'objets allouables en mode partagé, its_max_no_shared_alloc, n'est pas atteint, le service empile le nouvel objet partagé dans le tableau des objets partagés qui se comporte aussi comme une pile LIFO. Le service incrémente d'une unité le nombre courant des objets partagés, its_no_shared_objects. Tout objet alloué, qu'il soit partagé ou non, est ajouté au tableau des objets. Le tableau des objets partagés est un complément du tableau des objets. Le service peut, sur demande de l'utilisateur, réaliser une pré-initialisation à 0 de l'objet alloué.

Lorsqu'une condition n'est pas satisfaite, le service MM_alloc() déclenche une erreur ce qui permet de contrôler l'exploitation de la mémoire dans l'application.

Le service aligne la taille d'un nouvel objet sur une frontière de mot, avec une adresse de la zone mémoire libre, its_ptr, initialement placée sur une frontière de mot, le service MM_alloc() permet de maintenir l'alignement des objets sur une frontière de mot.

Le service de libération dynamique de mémoire MM_free() permet de libérer de la mémoire locale un objet préalablement alloué par le service d'allocation dynamique de mémoire MM_alloc(). Le service MM_free() vérifie l'égalité entre l'adresse de l'objet à libérer passée en paramètre et l'adresse du dernier objet du tableau, its_table, des objets alloués. Le service contrôle ainsi si l'objet dont la libération est demandée est bien le dernier alloué. Le service assure la gestion du tableau des objets sous forme d'une pile. Le service examine ensuite l'égalité entre l'adresse de l'objet à libérer et celle du dernier objet de la pile des objets partagés. Si l'égalité n'est pas vérifiée l'objet à libérer n'est pas un objet en mode partagé et le service libère l'objet de la table des objets, its_table. Si l'égalité est vérifiée, l'objet est en mode partagé et pour chaque calculateur élémentaire distant, le service MM_free() vérifie l'absence de l'objet à libérer dans la liste, réservée à ce calculateur, des objets attachés. Puis le service libère l'objet du tableau des objets, its_table et du tableau des objets en mode partagé, its_shared_tab. Enfin le service met à jour les informations sur la disponibilité de la mémoire en incrémentant la taille de la mémoire disponible, its_size, de la taille de l'objet libéré et en décrémentant de la même valeur le pointeur courant dans la mémoire, its_ptr.

Le procédé effectue des allocations et libérations dynamiques de mémoire dans un ordre déterminé de sorte que le premier objet libéré correspond au dernier objet alloué. Le procédé gère l'ensemble des objets alloués comme une pile. Le procédé de gestion de mémoire présente l'avantage de ne pas fragmenter la mémoire. Il permet de vérifier qu'une libération n'a pas été oubliée.

Le service MM_free() assure la destruction d'un objet exclusivement par son calculateur propriétaire et il conditionne la libération de la zone de mémoire affectée à cet objet à l'absence d'attachement d'un calculateur distant à l'objet. Le service présente l'avantage d'être bloquant lorsqu'il reste des attachements à l'objet à libérer. Le procédé contrôle ainsi les dépendances d'attachement d'objets alloués en mode partagé.

Le procédé comporte un service MM_avail_size() permettant de connaître la taille de la mémoire encore disponible pour une allocation d'objet, le service renvoie la valeur du champ its_size du gestionnaire de mémoire.

En plus de l'allocation et de la libération dynamique de mémoire, le procédé propose un mécanisme d'accès à un objet partagé par un calculateur élémentaire distant notamment au moyen de services dédiés de mise en visibilité MM_shared_enable(), d'attachement MM_attach() et de détachement MM_unattach() s'appuyant sur le gestionnaire de mémoire.

Le procédé comporte un service de mise en visibilité d'un objet, MM_shared_enable(), autorisant l'accès à un objet préalablement alloué en mode partagé. Lors de l'allocation dans la mémoire locale du calculateur élémentaire propriétaire, l'objet alloué en mode partagé n'est pas accessible aux autres calculateurs élémentaires. Le service MM_shared_enable() du calculateur propriétaire de l'objet recherche par son nom l'objet à rendre accessible dans le tableau des objets partagés, its_shared_table, puis il positionne l'indicateur d'accès, its_init_flag, de l'objet trouvé pour autoriser l'accès à cet objet par des calculateurs élémentaires distants. Le procédé déclare cet objet visible par les calculateurs distants. Le procédé présente une déclaration optionnelle et contrôlée par le calculateur propriétaire de mise en visibilité d'un objet alloué en mode partagé, les objets qui ne sont pas alloués en mode partagé restant invisibles pour un calculateur distant.

Le mécanisme d'accès à un objet partagé comprend des mécanismes globaux d'accès à la mémoire des calculateurs distants et des mécanismes de recherche et d'attachement à un objet appartenant à un calculateur élémentaire distant.

Dans le procédé, l'accès à la mémoire du calculateur distant est réalisé par l'accès au gestionnaire de mémoire dudit calculateur distant en deux étapes. Dans une première étape, en phase d'initialisation dans le service MM_init(), les descripteurs MM_MEM des calculateurs distants, qui sont lancés en parallèle, sont référencés dans le descripteur local, dans le tableau its_proc_mem. Le référencement dépend de la machine considérée, par exemple sur la figure 2, ce tableau 8 contient les adresses des gestionnaires des calculateurs distants. Plus précisément, la machine de traitement considérée dans l'invention permet de créer des tableaux en mémoire partagés, c'est-à-dire que chaque calculateur élémentaire est capable d'accéder en lecture et en écriture à la mémoire d'un autre calculateur élémentaire par simple lecture ou écriture dans une zone mémoire dite mappée. La machine considérée peut présenter une architecture à mémoire partagée centralisée, comme par exemple une machine CRAY, où la mémoire interne est commune à tous les calculateurs élémentaires. Mais elle peut présenter une architecture de mémoire distribuée, comme par exemple une machine MERCURY COMPUTER SYSTEMS ou une machine SGI, où les mémoires locales des calculateurs élémentaires sont différentes mais où un calculateur élémentaire peut accéder à une zone de mémoire d'un autre calculateur élémentaire dans la mesure où la zone a été initialisée sous forme d'un tableau partagé. Ainsi sur le premier type de machine à mémoire partagée centralisée, le service met les calculateurs distants en référence dans le tableau 8 its_proc_mem en y mémorisant les adresses des gestionnaires de mémoire des autres calculateurs. Sur le second type de machine à mémoires locales, le service crée un handle d'accès à la mémoire distante par appel à des services dédiés de la gestion système. Un handle d'accès est une poignée d'accès, c'est un pointeur de pointeur.

Dans la seconde étape d'accès au gestionnaire de mémoire du calculateur distant, le procédé réalise une mise en correspondance, appelée mapping, de la référence d'un calculateur distant avec une adresse virtuelle, cette dernière permettant de lire ou d'écrire physiquement dans la mémoire du calculateur distant. Sur le premier type de machine à mémoire centralisée, le mapping est immédiat dans la première phase, la référence étant égale à l'adresse de l'objet. Sur le second type de machine à mémoires locales le procédé effectue le mapping à l'aide d'appels à des fonctions du système d'exploitation de la machine. Il est à noter que le mapping sur machine SGI est automatiquement géré par le système d'exploitation de la machine et, vu de l'utilisateur, il se rapproche plus du modèle de mémoire globale du CRAY. Avec l'adresse virtuelle le procédé permet au calculateur élémentaire d'accéder au gestionnaire du calculateur distant. Le mapping est une mise en inter visibilité du calculateur élémentaire et du calculateur distant.

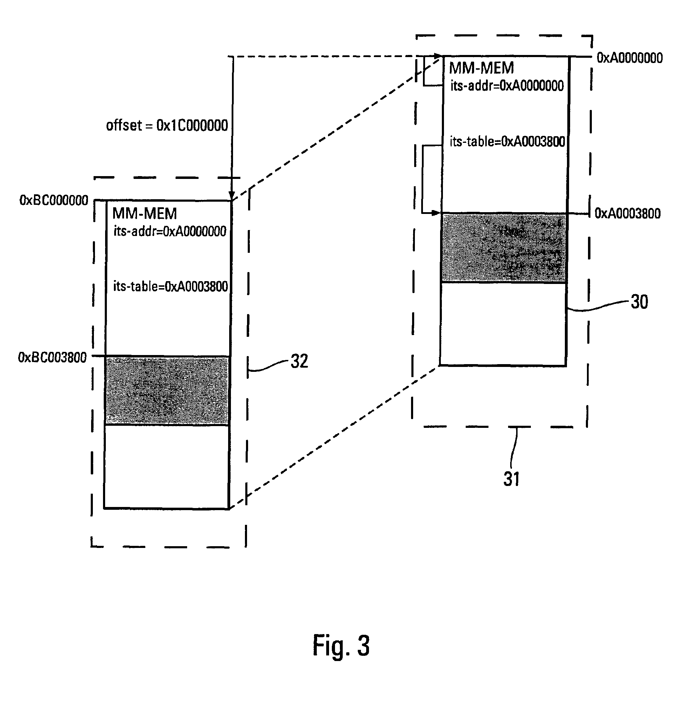

Dans l'exemple illustré par la figure 3, un calculateur 31 présente un gestionnaire de mémoire dont le descripteur 30 se situe à l'adresse 0xA0000000. Dans le procédé toutes les adresses contenues dans le descripteur sont relatives à l'espace d'adressage du calculateur propriétaire du gestionnaire, par exemple le pointeur its_table pointe sur le tableau des objets 0xA0003800 et le pointeur its_addr pointe effectivement au début du descripteur 0xA0000000. Dans la mémoire d'un second calculateur 32, appelé calculateur local, le procédé réalise un mapping du descripteur distant 30 à l'adresse virtuelle 0xBC000000 et le calculateur local 32 lit alors les champs du descripteur distant 30, dans l'exemple its_table contient 0xA0003800 et its_addr contient 0xA0000000. Ces informations accessibles ne sont pas immédiatement exploitables par le calculateur local 32. C'est pourquoi le procédé réalise une conversion des valeurs lues en ajoutant l'offset de décalage entre les deux adressages soit la différence entre 0xBC000000 et 0xA0000000, égale à 0x1C000000. Les valeurs converties sont ainsi exprimées dans l'espace d'adressage du calculateur local 32 et directement utilisables par ce calculateur.

Le procédé convertit les adresses distantes contenues dans le gestionnaire distant en adresses locales exploitables par le calculateur local en y ajoutant un offset. L'offset est égal au décalage entre l'adresse virtuelle du descripteur distant 30 dans le descripteur du calculateur local 32 et le contenu de l'adresse distante du début du descripteur distant 30. Le procédé convertit les adresses d'accès aux tableaux permettant de manipuler le descripteur distant et les adresses des objets alloués contenus dans ledit descripteur.

Le procédé propose un service MM_attach() d'attachement d'un calculateur local à un objet distant. Le service d'attachement effectue une recherche par son nom de l'objet sur chaque calculateur distant ou, dans une variante, sur un seul calculateur distant dont le numéro est désigné. Pour cela il réalise un mapping du descripteur distant à partir de sa référence mémorisée dans le tableau des adresses des gestionnaires its_proc_mem, lequel fournit une adresse virtuelle d'accès au gestionnaire de mémoire du calculateur distant ; il recherche l'objet dans le tableau distant des objets partagés, its_shared_tab, en cherchant une entrée dans ce tableau dont le nom corresponde au nom recherché et dont l'indicateur d'accès est positionné ; si l'objet n'est pas trouvé ou si le nombre d'objets attachables du calculateur distant, its_max_no_attach_obj, est atteint, le mapping du descripteur distant est supprimé ; sinon le mapping du calculateur distant est maintenu pendant toute la durée de maintien de l'attachement, le champ du nombre de calculateurs mappés, its_no_map_proc, du calculateur local est incrémenté et le service convertit l'adresse distante de l'objet, sauvegardée dans l'entrée trouvée, en une adresse locale par ajout d'offset. Lorsque le service d'attachement est appelé avec la désignation du numéro du calculateur distant possédant l'objet à attacher, le procédé vérifie dans le tableau 7, représenté sur la figure 2, des numéros logiques associé aux calculateurs mappés, its_map_proc_id, si ce calculateur est déjà mappé, et si ce n'est pas le cas, il le mappe et l'ajoute à la fin du tableau désigné par its_map_proc_id. Cette solution est beaucoup plus efficace en terme de temps d'exécution que la recherche par le nom de l'objet car elle évite de parcourir tous les calculateurs distants mais elle nécessite de mémoriser le nom du calculateur possédant l'objet.

Le service effectue ensuite une déclaration d'attachement à l'objet trouvé, dans le descripteur mémoire distant. Pour cela, chaque gestionnaire de mémoire contient une zone d'information, 4, 5 ou 6 sur la figure 2, de type MM_ATTACH par calculateur élémentaire distant sous forme d'un tableau des objets appartenant à ce gestionnaire et attachés à ce calculateur distant.

Le descripteur MM_ATTACH comporte les champs suivants :
le nombre d'objets attachés à ce calculateur élémentaire its_no_objects ;
le tableau des adresses des objets attachés par ce calculateur élémentaire its_objects.

Le service MM_attach() incrémente le nombre d'objets attachés its_no_objects dans le gestionnaire du calculateur distant et mémorise l'adresse du nouvel objet attaché dans le tableau correspondant its_objects. Le service d'attachement fonctionne en mode passant : la recherche de l'objet et l'attachement éventuel s'effectue une fois et le service se termine que l'attachement ait été réussi ou non. Dans une variante, le service fonctionne en mode bloquant : le procédé ne sort pas du service tant que l'objet recherché n'est pas trouvé et il n'y a pas de temporisation. L'attachement en mode passant est utile pour des services de reconfiguration lorsque, par exemple, un calculateur est remplacé par un autre. Le nouvel environnement peut être créé sans synchronisation, puisqu'il s'agit juste d'une substitution de calculateur avec des objets invariants. La variante en mode bloquant est plus communément utilisée car elle assure que les objets attachés sont réellement créés. Cette variante est utilisée lors des initialisations des gestionnaires de mémoire, permettant une synchronisation implicite de tous les calculateurs composant la machine de traitement.

La structure de déclaration des attachements constitue une pile, dans laquelle chaque objet attaché est ajouté, et chaque objet détaché est retiré. L'information sauvegardée pour un objet attaché est son adresse. Plusieurs attachements à un même objet peuvent être effectués par le même calculateur élémentaire. La pile peut donc contenir plusieurs fois et de manière non nécessairement contiguë la même adresse.

Dans un gestionnaire de mémoire, l'ensemble des zones MM_ATTACH pour tous les calculateurs distants est regroupé dans un tableau 3 pointé par its_attach_tab qui contient autant d'entrées 4, 5, 6 que de calculateurs élémentaires exécutant le programme. L'entrée (i) du tableau correspond aux attachements du calculateur numéro (i). Chaque zone MM_ATTACH d'un gestionnaire local est dédiée à un calculateur distant, l'accès en écriture étant réservé à ce calculateur distant. Le procédé présente l'avantage d'éviter les conflits d'accès de la méthode classique dans l'implémentation de la gestion de fichiers de type UNIX consistant à gérer un compteur de référence .

La déclaration d'attachement fait connaître au propriétaire de l'objet qu'un calculateur élémentaire distant s'est attaché à cet objet. Lorsque le calculateur élémentaire propriétaire veut détruire un objet, il consulte la pile d'attachement de chaque calculateur élémentaire distant, et cherche dans chaque pile la ou les entrées qui contiennent l'adresse de l'objet à détruire. La destruction, ou libération, n'est effectuée par le service MM_free() que lorsque l'objet n'est déclaré attaché dans aucune des piles d'attachement. La déclaration d'attachement permet au procédé d'empêcher la destruction de l'objet tant que les attachements sont maintenus.

Le procédé propose un service MM_unattach() pour détacher un calculateur local d'un objet distant. Le service de détachement effectue une recherche par son nom de l'objet du détachement sur chaque calculateur distant mappé localement, le nombre de ces calculateurs étant égal au champ du nombre de calculateurs mappés, its_no_map_proc, du calculateur local à détacher ; dans une variante, le service effectue une recherche sur un seul calculateur distant dont le numéro est désigné. Le service recherche l'objet dans le tableau distant des objets partagés its_shared_tab en cherchant une entrée dans ce tableau dont le nom corresponde au nom recherché. Le service vérifie dans le gestionnaire distant que le dernier élément de la pile des attachements du calculateur local j rangé dans its_attach_tab(j) correspond à l'objet à détacher. Le service permet ainsi de contrôler si l'objet dont le détachement du calculateur local est demandé, est bien le dernier objet du calculateur distant auquel le calculateur local s'était attaché. Le procédé gère la pile des attachements en mode LIFO. Enfin le service dépile l'objet de la pile d'attachement du descripteur distant puis il supprime le mapping de ce descripteur mémoire distant.

Le procédé permet d'accéder à des objets mémoire de calculateurs élémentaires distants.

Le procédé comporte un mécanisme de transfert entre un objet mémoire local et un objet mémoire distant. Ce mécanisme est mis en oeuvre à l'aide de trois services dédiés : une initialisation d'un transfert MM_transfer_init(), une réalisation du transfert MM_transfer() et une destruction du transfert initialisé MM_transfer_disp().

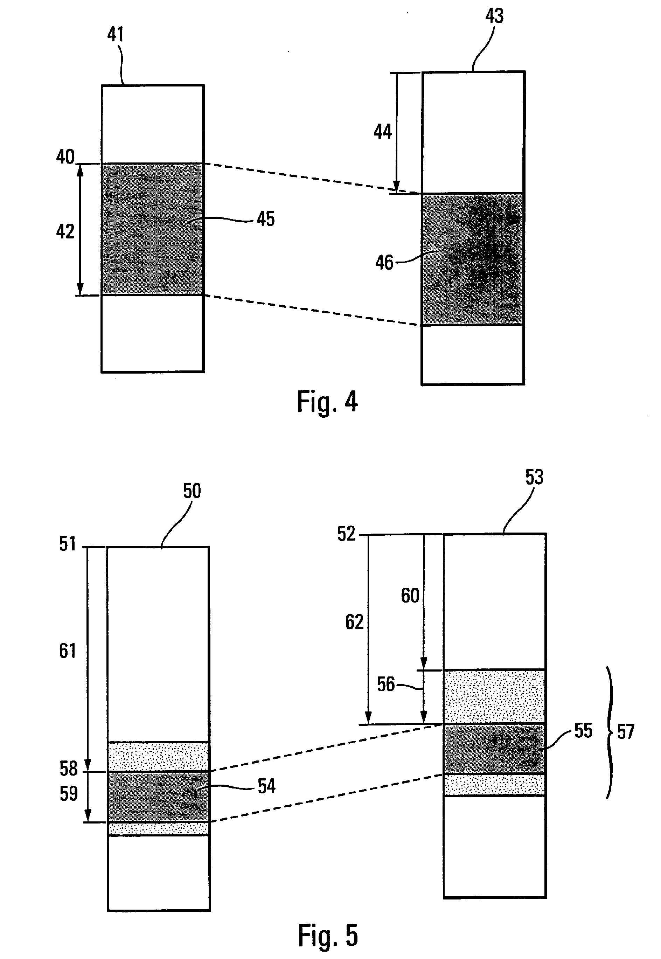

La figure 4 illustre le transfert de données entre un objet mémoire local 41, appelé source, et un objet mémoire distant 43, appelé destinataire. Une première zone mémoire 45 de la source est transférée dans une seconde zone mémoire 46 du destinataire. La première zone mémoire 45 présente une adresse 40 dans la source 41 et une taille 42. La seconde zone mémoire 46 présente une position 44 dans le destinataire 43.

L'initialisation du transfert consiste à définir l'objet mémoire local source, l'objet mémoire distant destinataire et les caractéristiques du transfert. L'initialisation consiste à établir un lien entre les deux zones mémoires concernées. Ce lien correspond à l'initialisation physique, par exemple de type DMA pour Direct Memory Access en anglais, permettant les transferts effectifs ultérieurs.

Le service d'initialisation d'un transfert, MM_transfer_init(), effectue l'initialisation à partir des paramètres de transfert suivants représentés sur la figure 4 :
l'adresse 40 de la zone à transférer dans l'objet local source, ptr_src ;
la taille 42 des données à transférer, size ;
le nom de l'objet distant destinataire 43, par exemple « rem_obj » ;
et la position 44 de la zone transférée dans l'objet destinataire, usr_offset.

Le service contrôle les paramètres et alloue un descripteur MM_TRANSFER qui mémorise les informations et les ressources allouées pendant l'initialisation.

Le descripteur MM_TRANSFER comporte les champs suivants :
les informations sur la source : its_src ;
celles sur le destinataire : its_dst ;
les informations sur le système pour effectuer le transfert : its_sys_info.

Le service effectue un attachement à l'objet distant par son nom. L'ensemble du descripteur mémoire distant est mappé localement et le service fournit une adresse locale de l'objet distant. Selon la machine de traitement considérée, le service met en oeuvre une initialisation physique du transfert. Puis il supprime le mapping du descripteur mémoire distant tout en maintenant la référence d'attachement mise à jour dans le descripteur distant lors de l'attachement. Le service permet ainsi d'éviter la destruction de l'objet distant destinataire d'un transfert. Le service renvoie l'adresse du descripteur de transfert.

Sur une machine à mémoire centralisée de type CRAY, l'initialisation physique du transfert est inutile. Sur une machine à mémoires locales, par exemple une machine MERCURY COMPUTER SYSTEMS, un transfert de mémoire entre calculateurs ne s'effectue pas sur un objet mémoire mais sur les descripteurs mémoire des calculateurs élémentaires concernés. Dans ce cas, illustré par la figure 5, le service MM_transfer_init(), initialisant un transfert entre une zone source 54 et une zone destinataire 55, récupère le handle d'accès 51 du descripteur local source 50 du transfert et celui 52 du descripteur distant destinataire 53 du transfert. Puis il convertit les paramètres de transfert, l'origine du transfert n'étant plus au début des objets mémoire mais au début, 51 et 52, des descripteurs mémoire, et effectue des appels, par exemple dx_create(), dx_copy(), au système de la machine s'appliquant sur les handles d'accès. Les nouveaux paramètres pour ces appels système sont la position 61 de la zone source 54 dans le descripteur source 50, la position 62 de la zone destinataire 55 dans le descripteur destinataire 53 et la taille 59 des données à transférer. Le service calcule ces nouveaux paramètres à partir des paramètres initiaux de transfert : l'offset 56 dans l'objet 57 distant destinataire, usr_offset ; l'adresse 58 du buffer local source, ptr_src; la taille 59 du transfert, size; et d'informations élaborées comme la position 60 de l'objet distant par rapport au début du descripteur mémoire, obj_offset. Ce service d'initialisation d'un transfert permet de grouper les traitements spécifiques à la machine de traitement considérée.

Le service de réalisation du transfert, MM_transfer(), effectue le transfert de mémoire entre deux objets distants. Sur le premier type de machine à mémoire partagée centralisée, le transfert est une simple copie. Sur le second type de machine temps réel à mémoires locales de type MERCURY COMPUTER SYSTEMS, le transfert utilise des DMA par l'utilisation de services du système de la machine, par exemple dx_start().

Le service MM_transfer_disp() assure la destruction d'un transfert. Le service de destruction de transfert libère les ressources système mises en oeuvre lors de l'initialisation physique du transfert selon la machine considérée. Ainsi sur une machine MERCURY COMPUTER SYSTEMS les ressources allouées sont détruites par appel aux services du système, par exemple dx_release(), dx_detroy(). Le service de destruction d'un transfert réalise un mapping du calculateur élémentaire distant propriétaire de l'objet destinataire du transfert et obtient une adresse locale du descripteur distant. Le service se détache alors de l'objet distant. Puis il libère le descripteur de transfert.

Par le transfert de mémoire à mémoire, le procédé permet de lire ou d'écrire un objet distant alloué en mode partagé. Le procédé présente l'avantage d'éviter de mapper systématiquement l'objet mémoire distant pour y écrire ou y lire des données, il apporte un gain en performance. La durée du mapping est limitée à la durée de l'attachement sur l'objet destinataire qui est préalable à l'initialisation du transfert ; le mapping étant détruit lors de l'initialisation du transfert il n'est pas maintenu pendant toute la durée du transfert.

Le procédé permet d'effectuer un transfert mémoire en parallèle avec d'autres activités dans le calculateur élémentaire, dans le cas où cela est compatible avec la machine de traitement. Le procédé permet de gérer des transferts synchrones et asynchrones. Avec un transfert asynchrone le temps pris par des entrées et sorties est masqué par exemple par du temps de calcul sur d'autres données. L'invention permet de réaliser en parallèle des transferts de mémoire sur plusieurs calculateurs élémentaires distants.

Enfin le procédé comporte un service MM_disp() de destruction du gestionnaire de mémoire. Le service MM_disp() effectue une libération de la mémoire du calculateur élémentaire par un appel au système d'exploitation de la machine lorsque cette mémoire ne contient plus d'attachement de calculateur distant ni d'objets alloués.

Le procédé n'effectue qu'une seule allocation par le système d'exploitation de la machine de traitement et une seule libération de la mémoire du calculateur élémentaire à l'instantiation et à la destruction de l'entité de gestion de la mémoire. La mémoire disponible est allouée en une seule fois et toutes les entités instanciées par la suite le sont à partir de cette quantité de mémoire initiale. Le procédé permet de limiter le nombre d'appels au système d'exploitation de la machine de traitement. Le procédé permet d'assurer une allocation et une libération dynamique des objets en mémoire de manière plus efficace que les primitives du système d'exploitation de la machine.

## Revendications

1. Procédé de gestion de la mémoire d'une machine comportant plusieurs calculateurs élémentaires, disposant chacun d'une mémoire locale **caractérisé en ce qu'**il comporte les services suivants :
- une allocation d'une quantité de mémoire initiale dans la mémoire locale d'au moins un calculateur élémentaire ;
- une allocation et une libération dynamiques d'objet par un calculateur élémentaire dans sa quantité de mémoire initiale telles que le premier objet libéré est le dernier alloué ;
- une allocation dynamique par un calculateur élémentaire dans sa quantité de mémoire initiale d'un objet partagé telle que ledit calculateur élémentaire est propriétaire de l'objet partagé et déclare cet objet partagé accessible à ou aux calculateurs élémentaires distants ;
- un attachement d'au moins un calculateur élémentaire distant à l'objet partagé, ledit calculateur élémentaire distant n'étant pas propriétaire de l'objet partagé, avec une liste d'attachements gérée par le calculateur élémentaire propriétaire de l'objet partagé ;
- un détachement d'un calculateur élémentaire distant de l'objet partagé avec mise à jour de ladite liste d'attachements ;
- un transfert d'un objet d'un calculateur élémentaire à un objet partagé d'un calculateur élémentaire distant ;
- une libération de la mémoire locale pour chaque calculateur élémentaire.

2. Procédé de gestion de la mémoire selon la revendication 1, **caractérisé en ce qu'**il comporte un gestionnaire de mémoire à travers lequel le procédé effectue lesdits services.

3. Procédé de gestion de la mémoire selon l'une des revendications 1 et 2, **caractérisé en ce que** lors de l'allocation de ladite quantité de mémoire initiale dans la mémoire locale d'un calculateur élémentaire, un gestionnaire de mémoire est instantié dans ladite quantité de mémoire allouée.

4. Procédé de gestion de la mémoire selon la revendication 2, **caractérisé en ce qu'**il effectue une unique allocation de mémoire dudit calculateur élémentaire lors de l'instantiation dudit gestionnaire de mémoire.

5. Procédé de gestion de la mémoire selon l'une des revendications 3 à 4, **caractérisé en ce qu'**il effectue une unique libération de mémoire dudit calculateur élémentaire lors de la destruction dudit gestionnaire de mémoire.

6. Procédé de gestion de la mémoire selon l'une des revendications 3 à 5, **caractérisé en ce qu'**un même gestionnaire de mémoire est instantié sur les divers calculateurs élémentaires.

7. Procédé de gestion de la mémoire selon l'une des revendications 3 à 6, **caractérisé en ce que** ladite liste d'attachements appartient au gestionnaire de mémoire du calculateur propriétaire de l'objet partagé et attaché.

8. Procédé de gestion de la mémoire selon la revendication 7, **caractérisé en ce que** ledit gestionnaire de mémoire du calculateur propriétaire comporte une zone par calculateur distant, chaque zone étant réservée à un unique calculateur distant, dans laquelle le procédé mémorise les attachements dudit calculateur distant sur les objets du calculateur propriétaire.

9. Procédé de gestion de la mémoire selon la revendication 8, **caractérisé en ce qu'**il mémorise lesdits attachements par calculateur élémentaire de sorte que le premier objet détaché est le dernier objet attaché.

10. Procédé de gestion de la mémoire selon la revendication 8, **caractérisé en ce qu'**il ne détruit un objet alloué en mode partagé que par le calculateur élémentaire propriétaire et lorsque ledit objet ne présente plus d'attachement.

11. Procédé de gestion de la mémoire selon l'une des revendications précédentes, **caractérisé en ce que** lors de l'attachement d'un calculateur élémentaire à un objet distant, le procédé convertit automatiquement les adresses distantes de l'objet attaché en adresses locales dudit calculateur élémentaire.

12. Procédé de gestion de la mémoire selon l'une des revendications précédentes, **caractérisé en ce qu'**il effectue un transfert sans maintenir le mapping du gestionnaire de mémoire distant.

13. Procédé de gestion de la mémoire selon l'une des revendications précédentes, **caractérisé en ce qu'**il effectue en parallèle des transferts sur plusieurs calculateurs distants.

14. Procédé de gestion de la mémoire selon l'une des revendications précédentes, **caractérisé en ce qu'**il effectue en parallèle un transfert et d'autres activités dans le calculateur élémentaire.

15. Bibliothèque de gestion de mémoire **caractérisée en ce qu'**elle met en oeuvre le procédé selon l'une des revendications précédentes.

16. Machine de traitement comportant plusieurs calculateurs élémentaires **caractérisée en ce qu'**elle met en oeuvre le procédé selon l'une des revendications précédentes.
